# EUROPÄISCHE PATENTANMELDUNG

(11) **EP 3 069 687 A1**
(43) Veröffentlichungstag der Anmeldung: **21.09.2016**
(21) Anmeldenummer: 15159686.3
(22) Anmeldetag: 18.03.2015
(51) Int. Cl.: A61D 1/00, G01N 21/3581, G01N 21/65

(54) **VORRICHTUNG ZUR ARRETIERUNG MINDESTENS EINES LEBENDEN VOGELS FÜR DIE AUFNAHME CHARAKTERISTISCHER SCHWINGUNGSSPEKTREN UND ZUR GESCHLECHTSBESTIMMUNG**

(71) Anmelder: Agri Advanced Technologies GmbH, 49429 Visbek (DE)
(72) Erfinder: Meissner, Dr. Sven, 09618 Branderbisdorf (DE); Fischer, Björn, 09212 Limbach-Oberfrohna (DE)
(74) Vertreter: Vossius & Partner Patentanwälte Rechtsanwälte mbB

(57) **Zusammenfassung**

Die Erfindung betrifft eine Vorrichtung zur Arretierung mindestens eines Körperteils eines lebenden Vogels für die Aufnahme charakteristischer Schwingungsspektren, wobei die Vorrichtung eine Reliefmaske zur Einfügung des zu arretierenden Körperteils, mindestens einen zur Arretierung des Körperteils vorgesehenen, bewegbaren Haltearm, und einen Sensorzugang mit einem Lichtkanal zur Führung des von einer Lichtquelle auf den arretierten Körperteil eingestrahlten Anregungslichts und zur Aufnahme des vom arretierten Körperteil rückgestreuten Lichts. Die Erfindung betrifft ferner Einrichtungen und Verfahren zur Bestimmung des Geschlechts von lebenden Vögeln.

## Beschreibung

Die Erfindung betrifft eine Vorrichtung zur Arretierung mindestens eines Körperteils eines lebenden Vogels für die Aufnahme charakteristischer Schwingungsspektren, insbesondere für Ramanspektroskopie. Die Erfindung betrifft ferner eine Einrichtung und ein Verfahren zur Bestimmung des Geschlechts einer oder mehrerer lebender Vögel.

Die Erfindung dient zur Bestimmung des Geschlechts von lebenden Vögeln mit Hilfe schwingungsspektroskopischer Verfahren, vorzugsweise direkt am lebenden Vogel, zum Beispiel im Bereich gut durchbluteter Körperareale mit hohem DNA-Gehalt, insbesondere am Schnabel und/oder am Fuß.

Aufgrund der starken Spezialisierung in der Hühnerzucht, der Hybridisierung, ist die Geschlechtsbestimmung des frisch geschlüpften Kükens, insbesondere Eintagsküken, von außerordentlicher Bedeutung. Die Geschlechtsbestimmung erfolgt in der Legehennenproduktion manuell bzw. visuell anhand der Kloakenmorphologie, der Federfarbe oder der Federform bestimmter Federpartien.

Die männlichen Küken der Legehennen-Linien werden nur in geringer Anzahl zur Zucht benötigt bzw. sind aufgrund ihrer Genetik nicht für die Mast geeignet und werden direkt nach dem Schlupf als Nebenprodukt aussortiert und getötet.

Bei dem aktuell etablierten Verfahren der manuellen Präsentation der Kloake kann es zu Verletzungen kommen, die einen Kükenverlust, zumindest aber eine Einschränkung der Kükenvitalität verursacht. Außerdem kann eine Keimverschleppung von Tier zu Tier nicht ausgeschlossen werden. Zudem verursacht dieses Verfahren Stress bei den Tieren und ist vergleichsweise kostenintensiv.

Dabei erfordert die manuelle Geschlechtsbestimmung anhand der Kloakenmorphologie durch den Prüfer eine mechanische Präsentation der Kloake, wobei die sonst verborgenen Geschlechtsmerkmale mittels Druck nach außen gestülpt werden. Eine Verletzung des frisch geschlüpften Kükens bzw. Verschleppung von Keimen kann, wie bereits oben beschrieben, hierbei nicht ausgeschlossen werden. Außerdem ist die Genauigkeit unter Beachtung einer möglichst schonenden Behandlung der Küken direkt von der individuellen Fähigkeit des Prüfers abhängig und nicht stabil.

Eine Vorrichtung und ein Verfahren zur Behandlung des Unterschnabels eines Vogels zur morphologischen Veränderung der Schnabelbeschaffenheit, vorzugsweise zur Schnabelbehandlung mit Zungenschutz, sind in WO 2005/046323 A beschrieben, wobei die Vorrichtung eine Vogelkopf-Positioniervorrichtung, eine kontaktfreie Energiequelle, die Energie abstrahlt, und eine Energieleitsonde aufweist. Die Vorrichtung weist ferner einen Zungenkontrollvorsprung auf, der nahe der Vogelkopf-Positioniervorrichtung liegt, wobei der Zungenkontrollvorsprung in die Kehle des Vogels nahe dem Unterschnabel drückt, wenn der Unterschnabel des Vogelkopfes durch die Schnabelaufnahmeöffnung geführt ist. Die Vogelkopf-Positioniervorrichtung weist eine erste Hauptseite und eine zweite Hauptseite sowie eine durch die erste und die zweite Hauptseite gebildete Schnabelaufnahmeöffnung auf, wobei die Vogelkopf-Positioniervorrichtung geeignet sein soll, den Kopf eines Vogels nahe der ersten Hauptseite zu positionieren, wobei mindestens ein Abschnitt des Unterschnabels des Vogelkopfes durch die Schnabelaufnahmeöffnung vorsteht und nahe der zweiten Hauptseite der Vogelkopf-Positioniervorrichtung freiliegt.Die Energieleitsonde leitet Energie von der kontaktfreien Energiequelle, wobei von der kontaktfreien Energiequelle abgestrahlte Energie auf mindestens einen Abschnitt des Unterschnabels auftrifft, der nahe der zweiten Hauptseite der Vogelkopf-Positioniervorrichtung freiliegt. Mit der abgestrahlten Energie wird das biologische Gewebe zumindest in einem Teilbereich des Unterschnabels abgetötet bzw. verödet, was direkt oder nachfolgend zu einer morphologischen Veränderung der Schnabelbeschaffenheit führt.

Ein Verfahren zur Bestimmung des Geschlechts von Vögeln ist in der DE 10 2007 013 107 A1 beschrieben, bei dem DNA-relevantes Zellmaterial des geschlechtlich zu bestimmenden Vogels mit Licht untersucht und die Molekülschwingungen gemessen werden, wobei das durch das Licht entstehende Spektrum der Molekülschwingungen erfasst und mit vorgegebenen sowie geschlechtspezifische DAN-Strukturen der zu untersuchenden Vogelart repräsentierenden Referenzspektren verglichen wird und wobei aus dessen Spektralvergleich eine auf Grundlage des DNA-Gehalts des Zellmaterials basierende Geschlechtszuordnung des Vogels getroffen wird.Dabei kann das DNArelevante Zellmaterial aus einem Schaft einer jungen Feder des Vogels entnommen werden. Ein Problem dabei besteht darin, dass die Beschaffung von DNA-relevantem Zellmaterial aus dem Schaft der Feder eines jungen Vogels mittels der vielen Präparierungs- und Vorbereitungsschritte relativ zeitaufwändig ist.

Der vorliegenden Erfindung liegt u.a. die Aufgabe zugrunde, eine Vorrichtung zur Arretierung mindestens eines Körperteils eines lebenden Vogels für die Aufnahme charakteristischer Schwingungsspektren anzugeben, die derart geeignet ausgebildet ist, dass charakteristische Molekülschwingungen von außen an einer bevorzugten Stelle eines Vogelkörperteils einfach erfasst werden können.

Die Aufgabe wird durch die Merkmale des Patentanspruchs 1 gelöst. Die abhängigen Patentansprüche beziehen sich auf weitere Aspekte der Erfindung. Die Erfindung stellt ferner eine Einrichtung und ein Verfahren bereit, mit denen auf einfache , schnelle, und schonende Weise das Geschlecht einer oder mehrerer lebender Vögel bestimmt werden kann.

Gemäß einem Aspekt der vorliegenden Erfindung ist eine Vorrichtung zur Arretierung mindestens eines Körperteils eines lebenden Vogels für die Aufnahme charakteristischer Schwingungsspektren bereitgestellt, wobei die Vorrichtung eine Reliefmaske zur Einfügung des zu arretierenden Körperteils, mindestens einen zur Arretierung des Körperteils vorgesehenen, bewegbaren Haltearm, und einen Sensorzugang mit einem Lichtkanal zur Führung des von einer Lichtquelle auf den arretierten Körperteil eingestrahlten Anregungslichts und zur Aufnahme des vom arretierten Körperteil rückgestreuten Lichts aufweist.

Die Reliefmaske kann mindestens eine Aussparung aufweisen, die weitgehend der Form des zu arretierenden Körperteils entspricht.

Vorzugsweise umfasst das Körperteil einen Kopf, einen Schnabel und/oder einen Hals eines Vogels und die Reliefmaske umfasst eine Aussparung für den Kopf, eine Aussparung für den Schnabel, und/oder eine Aussparung für den Hals des Vogels, wobei die Aussparungen vorzugsweise einen einheitlichen Raum in Form der Reliefmaske zumindest für ein Vorderteil des Kopfes des Vogels ausbilden.

Dabei kann der mindestens eine bewegbare Haltearm im Bereich der Aussparung für den Hals des Vogels angeordnet sein.

Vorzugsweise weist die Vorrichtung ferner einen ersten Lichtfang auf, der vorzugsweise zwischen dem Sensorzugang und der Aussparung für den Kopf angeordnet ist, um den Kopf und insbesondere die Augen des Vogels zu schützen.

Ferner kann die Vorrichtung ein Kopfstützteil, ein Schnabelumhüllungsteil, und/oder ein Halsstützteil aufweisen, wobei dem Kopfstützteil die Aussparung für den Kopf, dem Schnabelumhüllungsteil die Aussparung für den Schnabel, und dem Halsstützteil die Aussparung für den Hals des Vogels zugeordnet sind. Die Stütz- und Umhüllungsteile können zu einem oder mehreren Materialblöcken zusammengefasst sein, durch den bzw. die der geschlossene Lichtkanal verlaufen kann.

Der Lichtkanal kann durch das Kopfstützteil und das Schnabelumhüllungsteil zu einem Messareal (40) verlaufen und das Halsstützteil vorzugsweise mit dem Schnabelumhüllungsteil vereinigt sein.

Vorzugsweise kann das Kopfstützteil eine Kopfaufnahmeöffnung und das Schnabelumhüllungsteil eine Schnabelaufnahmeöffnung aufweisen, die Teil der Reliefmaske sind.

Der Lichtkanal kann bis etwa auf den mittigen Bereich einer oberen Ausbuchtung der Aussparung für den Schnabel geführt sein.

Die Vorrichtung kann ferner einen ersten Spülluftzugang aufweisen, wobei der Spülluftzugang vorzugsweise durch den Lichtfang und dem Kopfstützteil hindurch geführt ist und in dem Lichtkanal mündet und zur dortigen Reinigung dient.

Am Schnabelumhüllungsteil und am Halsstützteil kann sich ferner ein zweiter Lichtfang zum Schutz des Vogels befinden, wobei durch den zweiten Lichtfang hindurch vorzugsweise ein zweiter Spülluftzugang geführt ist, der in den Lichtkanal mündet.

Vorzugsweise befindet sich im Lichtkanal eine Fokussiereinrichtung beispielsweise in Form eines Objektivs oder einer einfachen sammelnden Linse. Der Lichtkanal bzw. der Sensorzugang kann dabei einen Zugang zur Fokussiereinrichtung aufweisen um eine manuelle Einstellung der Fokussiereinrichtung zu ermöglichen. Die Fokussiereinrichtung kann auch automatisch gesteuert werden.

Ferner kann der mindestens eine bewegbare Haltearm als mindestens ein bewegbarer Arretierungshebel, als drehbar gelagerter bügelförmiger, dem Körperteil angepasster Haltearm und/oder keulenförmig ausgebildet sein, wobei die Bewegung des Haltearms vorzugsweise gesteuert ausgelöst und rückgeführt wird. Der mindestens eine bewegbare Haltearm ist vorzugsweise in gerader Verschiebung oder mit Schwenkungsdurchführung ausgebildet.

Vorzugsweise ist der mindestens eine Haltearm jeweils paarweise angeordnet, vorzugsweise sind zwei Haltearme beispielsweise im Bereich der Aussparung für den Hals vorgesehen.

Die Vorrichtung kann ferner mindestens einen Lautsprecher zur akustischen Degression der Vogelaktivität aufweisen, wobei der Lautsprecher vorzugsweise mit dem mindestens einen Haltearm in Verbindung steht oder daran angeordnet ist.

Das Schnabelumhüllungsteil kann zusätzlich mindestens zwei Aussparungen für Nasenlöcher aufweisen.

Gemäß eines weiteren Aspekts der vorliegenden Erfindung wird eine Einrichtung zur Bestimmung des Geschlechtes von lebenden Vögeln anhand von charakteristischer Schwingungsspektren bereitgestellt. Die Einrichtung weist eine Vorrichtung zur Arretierung des lebenden Vogels, insbesondere eine Vorrichtung gemäß obiger Beschreibung, und eine Einheit zur Aufnahme von charakteristischer Schwingungsspektren auf, vorzugsweise eine Ramanspektroskopieeinheit, mit einer Lichtquelle, einem Sensor und einer Auswerteeinheit.

Gemäße eines weiteren Aspekts der vorliegenden Erfindung wird eine Einrichtung zur Bestimmung des Geschlechtes von mehreren lebenden Vögeln anhand von charakteristischer Schwingungsspektren bereitgestellt, welche ein Rondell oder ein Endlosband, mindestens zwei Vorrichtungen zur Arretierung der lebenden Vögel, insbesondere mehrere Vorrichtungen wie oben beschrieben, und mindestens eine Einheit zur Aufnahme von charakteristischer Schwingungsspektren aufweist. Vorzugsweise kommt eine Ramanspektroskopieeinheit, mit einer Lichtquelle, einem Sensor und einer Auswerteeinheit zum Einsatz.

Die mindestens zwei Arretierungsvorrichtungen sind vorzugsweise an einem äußeren Rand des Rondells bzw. des Endlosbandes angebracht, und die Einrichtung kann ferner eine zentrale Einheit zur Energieversorgung der mindestens zwei Vorrichtungen zur Arretierung der lebenden Vögel, eine Einheit zur Spülluftzuführung zu den Arretierungsvorrichtungen, wobei die Einheit zur Spülluftzuführung vorzugsweise die Einheit zur Energieversorgung umgibt, und mindestens eine Separationseinheit aufweisen.

Ferner kann die Separationseinheit mit einer Geschlechts-Entscheidungs-Auswerteeinheit in Verbindung stehen und vorzugsweise ein erstes Transportband und ein zweites Transportband aufweisen.

Vorzugsweise weist die Einrichtung eine vorgegebene erste Stillstands-Position für die Aufnahme der zu arretierenden Vögel und zur Messdatenaufnahme und eine vorgegebene zweite Stillstands-Position zur Separierung der bereits geschlechtsbestimmten Vögel mit Hilfe der Separationseinheit auf.

Gemäß eines weiteren Aspekts der vorliegenden Erfindung wird ein Verfahren zur Bestimmung des Geschlechtes von lebenden Vögeln bereitgestellt, insbesondere unter Verwendung einer Vorrichtung wie oben beschrieben, oder einer der oben beschriebenen Einrichtungen, wobei das Verfahren die folgenden Schritte umfasst: Arretieren eines Körperteils des lebenden Vogels; Einstrahlen eines Anregungslichts auf das arretierte Körperteil unter Verwendung eines Lichtkanals; Aufnahme eines charakteristischen Schwingungsspektrums des vom arretierten Körperteil durch den Lichtkanal rückgestreuten Lichts; und Bestimmung des Geschlechts mittels Auswertung des charakteristischen Schwingungsspektrums unter Verwendung von mindestens einem chemometrischen Verfahren.

Die Erfindung dient der Bestimmung des Geschlechts von Vögeln mit Hilfe schwingungsspektroskopischer Verfahren, vorzugsweise direkt am lebenden Vogel, zum Beispiel im Bereich gut durchbluteter Körperareale mit offen-gelegtem hohem DNA-Gehalt, insbesondere am Schnabel und/oder am Fuß.

Nachfolgend wird die vorliegende Erfindung anhand von Ausführungsbeispielen und der Figuren näher erläutert.

Es zeigen:
- Fig. 1: eine schematische Darstellung einer Seitenansicht einer Vorrichtung gemäß einer Ausführungsform der vorliegenden Erfindung,
- Fig. 2: eine schematische Darstellung einer Seitenansicht einer Vorrichtung gemäß einer weiteren Ausführungsform der vorliegenden Erfindung,
- Fig. 3: eine schematische Darstellung einer Seitenansicht einer Vorrichtung gemäß einer weiteren Ausführungsform der vorliegenden Erfinding,
- Fig. 4: eine schematische Darstellung einer Hinteransicht einer Vorrichtung gemäß einer Ausführungsform der vorliegenden Erfindung,
- Fig. 5: eine schematische Darstellung einer Hinteransicht einer Vorrichtung gemäß einer Ausführungsform der vorliegenden Erfindung,
- Fig. 6: eine schematische Darstellung einer Hinteransicht einer Vorrichtung gemäß einer weiteren Ausführungsform der vorliegenden Erfindung,
- Fig. 7: eine schematische Darstellung in Draufsicht einer Einrichtung gemäß einer Ausführungsform der vorliegenden Erfindung mit mehreren Vorrichtungen gemäß der Fig. 1 bis Fig. 6
- Fig. 8: eine schematische Darstellung in Draufsicht einer Einrichtung gemäß einer weiteren Ausführungsform der vorliegenden Erfindung mit mehreren Vorrichtungen gemäß der Fig. 1 bis Fig. 6,
- Fig. 9: eine schematische Darstellung zweier Messsignale gemäß der vorliegenden Erfindung,
- Fig. 10: ein beispielhafter Ablaufplan zur Bestimmung des Geschlechts eines lebenden Vogels unter Verwendung von chemometrischen Verfahren gemäß einer Ausführungsform der vorliegenden Erfindung, und
- Fig. 11: ein beispielhaftes Histogramm der berechneten Klassifikatoren gemäß Fig. 10 gemäß einer Ausführungsform der vorliegenden Erfindung.

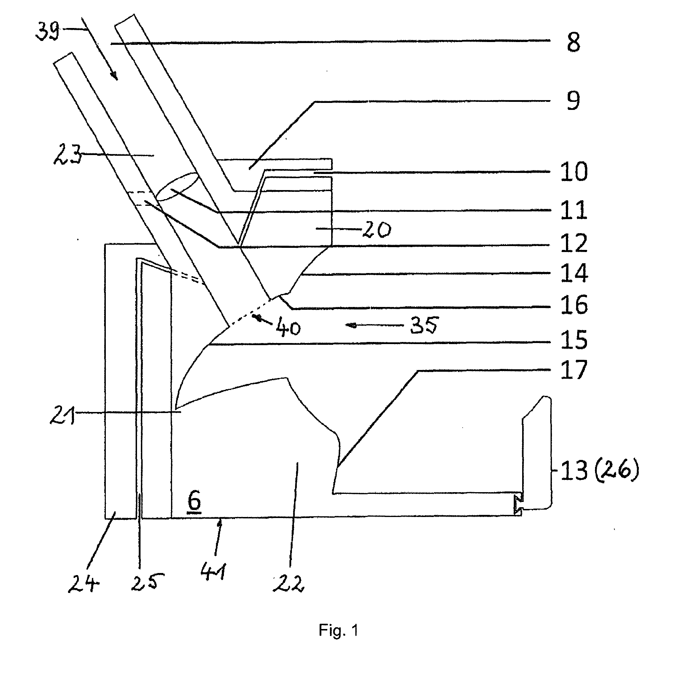

In Fig. 1 ist eine schematische Darstellung einer Vorrichtung 6 zur Arretierung zumindest eines Körperteils eines lebenden Vogels für die Aufnahme charakteristischer Schwingungsspektren gezeigt. Die Vorrichtung eignet sich insbesondere zur Aufnahme charakteristischer Schwingungsspektren von durch den Körperteil rückgestreutem Licht zur Ramanspektroskopie für die Geschlechtsbestimmung des Vogels. Die Vorrichtung 6 weist zumindest einen Materialblock 41 mit einem Sensorzugang 8 mit einem Lichtkanal 23 zur Führung des von einer Lichtquelle eingestrahlten Anregungslichts 39 und zur Aufnahme von charakteristischen Molekülschwingungen aus einem vorgegebenem Messareal 40,einer Reliefmaske 35 zur Einfügung des zu arretierenden Körperteils auf, wobei der Reliefmaske 35 das Messareal 40 zugeordnet ist, und mindestens einen zur Arretierung des Körperteils vorgesehenen, bewegbaren Haltearm 13, 26 in einem vorgegebenen Abstand zur Reliefmaske 35.

Die Reliefmaske 35 weist tiefenmäßig mindestens eine Aussparung 14, 15, 16, 17 auf, die weitgehend der Form des Körperteils entspricht.

Der Materialblock 41 besteht vorzugsweise aus festem Material.

Im Folgenden wird die Vorrichtung 6 beispielhaft für Reliefmasken unter Berücksichtigung von Schnabel, Kopf und Hals als Körperteile beschrieben. Erfindungsgemäß sind aber auch Reliefmasken zur Aufnahme anderer Körperteile, z.B. eines Fußes oder beider Füße des Vogels umfasst.

Die Vorrichtung 6 zur Arretierung in der schematischen Darstellung in Fig. 1 zeigt mehrere beispielsweise mit der Ramanspektroskopie erfassbare Körperteile von Vögeln, wobei zu den Körperteilen ein Kopf, ein Schnabel und ein Hals eines Vogels gehören, wobei die Vorrichtung 6 umfasst: einen Sensorzugang 8, zur Führung des von einer Lichtquelle (nicht eingezeichnet) eingestrahlten Anregungslichts und Aufnahme zumindest der hierdurch angeregten Molekülschwingungen, eine Aussparung 14 für den Vogelkopf, eine Aussparung 15 für den Vogelschnabel, eine Aussparung 17 für den Hals des Vogels, und einen Lichtfang 9, der sich zwischen dem Sensorzugang 8 und der Aussparung 14 befindet.

Die Aussparungen 14, 15 und 17 bilden einen einheitlichen Raum in Form einer Reliefmaske 35 zumindest für den Vorderteil des Kopfes des Vogels aus und im Bereich der Aussparung 17 für den Hals und/oder und im Bereich der Schnabelaufnahmeöffnung 29 sind Haltearme 13, 26 bewegbar und den Vogelkopf arretierend angeordnet.

Die Vorrichtung 6 umfasst ferner: ein Kopfstützteil 20, ein Schnabelumhüllungsteil 21 und ein Halsstützteil 22, denen folgende Aussparungen in Form einer Reliefmaske 35 zur Aufnahme zumindest des Vorderteils des Vogelkopfes zugeordnet sind: dem Kopfstützteil 20 die Aussparung 14 für den Vogelkopf, dem Schnabelumhüllungsteil 21 die Aussparung 15 für den Schnabel, dem Halsstützteil 22 die Aussparung 17 für den Hals oder den Körper des Vogels. Im Sensorzugang 8 befindet sich der geschlossene Lichtkanal 23, der mit dem Kopfstützteil 20 und dem Schnabelumhüllungsteil 21 in Verbindung steht und gegebenenfalls durch diese hindurch verläuft. Das Halsstützteil 22 kann mit dem Schnabelumhüllungsteil 21 vereinigt sein, wobei dem Kopfstützteil 20 unterseits eine Aussparung 14 des Kopfes des Vogels und zumindest oberseits ein Lichtfang 9 zugeordnet sind. Im Schnabelumhüllungsteil 21 befindet sich die Aussparung 15 für den Schnabel. Es besteht auch in einem anderen Beispiel die Möglichkeit, den Sensorzugang 8 mit dem Lichtkanal 23 von der Unterseite des Schnabels an den Schnabel heranzuführen und die Unterseite des Schnabels zur Messdatenaufnahme und zur Auswertung beispielsweise mit dem Ramanspektroskopie-Verfahren zu nutzen. Hierbei kann der geschlossene Lichtkanal durch das Halsstützteil 22 und/oder das Schnabelumhüllungsteil 21 verlaufen.

Der in Fig. 1 dargestellte Lichtkanal 23 ist etwa mittig auf die Aussparung 15 für den Schnabel von oben auf den Schnabel geführt, insbesondere endet der Lichtkanal 23 in der Aussparung 15 für den Schnabel derart, dass das Licht auf den Vorderteil-Bereich zwischen Eizahn, der Spitze des Schnabels, und Schnabelhaut auf der Oberseite des Schnabels treffen und von dort in den Lichtkanal 23 zurückgestreut werden kann.

Durch den die Vogelaugen schützenden Lichtfang 9 und das Kopfstützteil 20 hindurch ist ein erster Spülluftzugang 10 geführt, der in dem Lichtkanal 23 zur dortigen Reinigung mündet und dem Druckluft von einer (nicht dargestellten) Druckluftquelle zugeführt werden kann.

In Fig. 1 befindet sich vorzugsweise am Schnabelumhüllungsteil 21 ein zweiter Lichtfang 24, der in den Lichtkanal 23 mündet, wobei durch den zweiten Lichtfang 24 hindurch ein zweiter Spülluftzugang 25 zur verbesserten Reinigung des Lichtkanals 23 geführt ist, dem ebenfalls Druckluft von derselben Quelle zugeführt werden kann.

In Fig. 1 ist auch gezeigt, dass sich innerhalb des Lichtkanals 23 eine für das einfallende und gestreute Licht vorgesehene Fokussiereinrichtung 11 beispielsweise in Form eines Objektivs oder einer einfachen Linse befinden kann.

Die dem zu halternden Körperteil, beispielsweise dem Hinterkopf, angepassten Haltearme 13 und 26 (verdeckt hinter dem Haltearm 13) sind an der Vorrichtung 6, insbesondere in einem angepassten Abstand zur Reliefmaske 35 am Haltstützteil 22 drehbar gelagert angeordnet. Die Vorrichtung zur Aufnahme charakteristischer Molekülschwingungen weist zumindest eine Halterung zur Fixierung des Kopfes auf, wobei zumindest ein Hebelarm entweder zentral den Hinterkopf in Position hält (löffelartig oder gabelartig) oder seitlich mit der Vorrichtung verbunden als Unterstützung im Bereich des Nackens fungiert. In den Figuren sind ein Haltearm 13, ein Befestigungshalter13b und ein schwenkbarer Anpasshaltearm13a gezeigt. Die Kontur bzw. Form der Anpasshaltearme 13a ist an die individuelle Anatomie der untersuchten Vogelart angepasst.

In Fig. 1 ist schematisch dargestellt, dass der Lichtkanal 23 im Sensorzugang 8 einen Zugang 12 zur Durchführung der Fokussierung des Objektes aufweist.

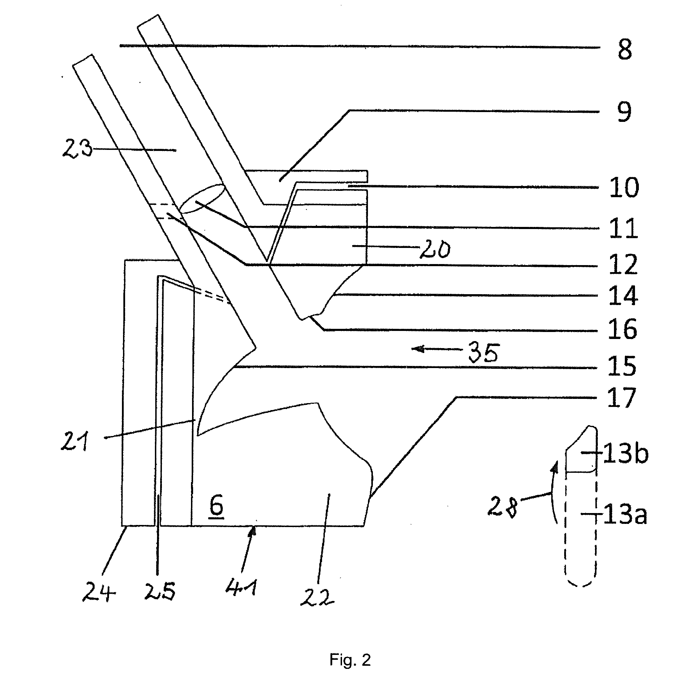

In Fig. 2 ist eine schematische Darstellung einer Seitenansicht der erfindungsgemäßen Vorrichtung 6 zur Arretierung des Kopfes von Vögeln mit zwei Spülluftzugängen 10 und 24, der Reliefmaske 35 sowie zwei separat angeordneten und einstellbaren Haltearmen 13, 26 (verdeckt) gezeigt. Die Haltearme 13 und 26 können mit zwei Teilen 13a als Anpasshalteteil des Haltearms an Körperteil und 13b als Befestigungsteil des Haltearms an der Vorrichtung oder an einer externen Halteeinrichtung ausgebildet sein.

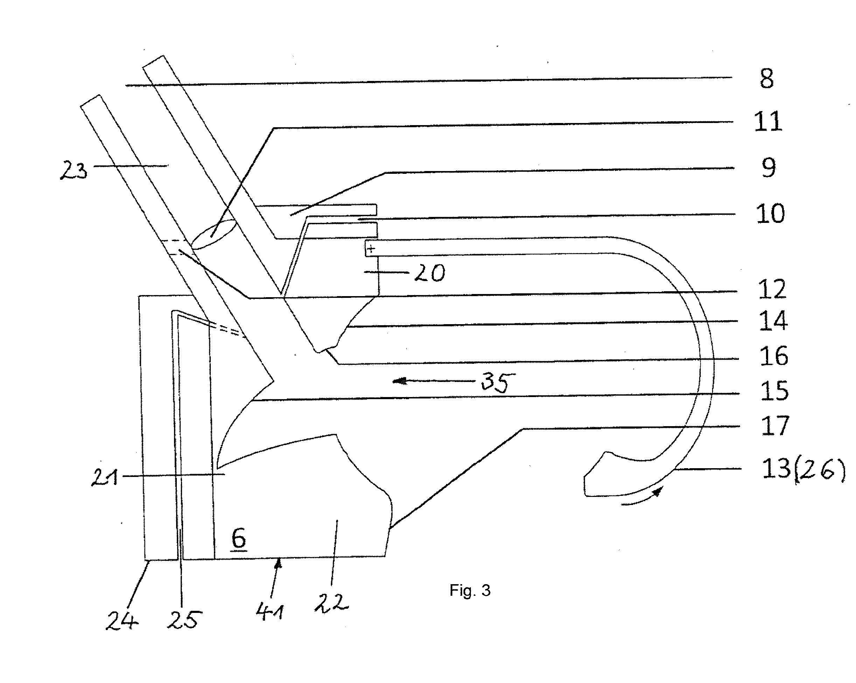

In Fig. 3 ist eine schematische Darstellung einer Seitenansicht der erfindungsgemäßen Vorrichtung zur Arretierung des Kopfes von Vögeln mit Spülluftzugängen 10 und 24, der Reliefmaske 35 und bügelartigen Haltearmen 13 und 26 gezeigt, wobei die bügelartigen Haltearme 13 und 26 (verdeckt) ebenfalls der Vorrichtung 6 oder separat über eine andere Halteinrichtung (nicht gezeichnet) zugeordnet sein können.

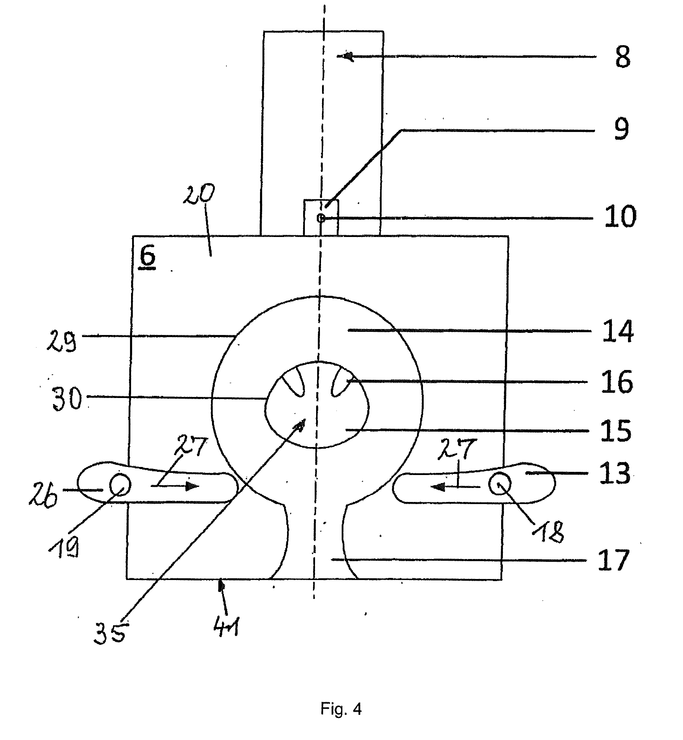

In Fig. 4 ist eine schematische Darstellung einer Hinteransicht bzw. Draufsicht auf die Reliefmaske 35 der erfindungsgemäßen Vorrichtung 6 zur Arretierung des Kopfes eines Vogels mit einer Kopfaufnahmeöffnung 29 und einer Schnabelaufnahmeöffnung 30 sowie linear verschiebbaren Haltearmen 13 und 26 angegeben.Dabei sind im Bereich des Halsstütztells 22 zumindest zwei bewegbare Arretierungshebel 13 und 26 als Haltearme für den Kopf des Vogels angeordnet, wobei die als Pfeile 27 gezeigte Bewegung der Arretierungshebei 13, 26 in Abhängigkeit der Messwertaufnahme gesteuert ausgelöst und rückgeführt wird.

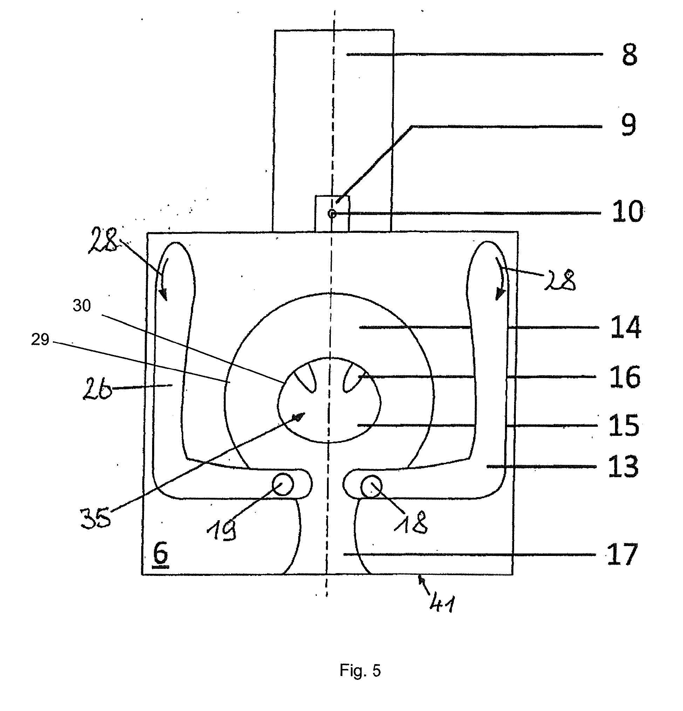

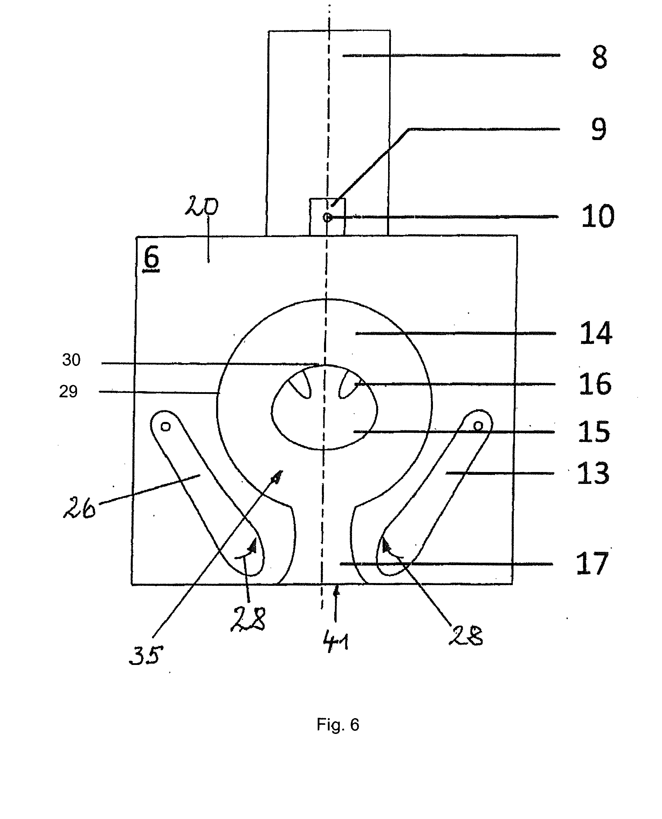

Die bewegbaren Arretierungshebel 13, 26 können in gerader Verschiebung (Pfeile 27) oder, wie in Fig. 5 und Fig. 6 gezeigt ist, mit Rotations-/Schwenkungsdurchführung (Pfeile 28) vorzugsweise in Richtung zum Halsbereich des Vogels ausgebildet sein.

Die Haltearme 13, 26 sind im Allgemeinen paarweise rechts und links im Bereich des Halsstützteils 22 und in einem vorgegebenen Abstand angeordnet.

Die Arretierungshebel 13, 26 stehen mit Lautsprechern 18,19 als Akustikeinheiten in Verbindung bzw. nehmen diese auf. Die Lautsprecher als erste und zweite Akustikeinheit können auch an einer anderen Stelle im weitgehenden Bereich der Vogelohren angeordnet sein.

In Fig. 5 ist eine schematische Darstellung einer Hinteransicht der erfindungsgemäßen Vorrichtung 6 zur Arretierung des Kopfes eines Vogels mit einer Kopfaufnahmeöffnung 29 und einer Schnabelaufnahmeöffnung 30 sowie zwei drehbar gelagerten Haltearmen 13 und 26, die sich in Hinteransicht als L-förmig und seitenverkehrt L-förmig sichtbar gegenüberliegen.

In Fig. 6 ist eine schematische Darstellung einer Hinteransicht der erfindungsgemäßen Vorrichtung 6 zur Arretierung des Kopfes von Vögeln mit einer Kopfaufnahmeöffnung 29 und einer Schnabelaufnahmeöffnung 30 sowie drehbar und paarweise gelagerten keulenförmigen Haltearmen 13 und 26 gezeigt. Die beiden Haltearme 13 und 26 haben die Bewegungsrichtung 28. In das Schnabelumhüllungsteil 21 sind ebenso wie bei den Figuren 4 und 5 zumindest zwei Aussparungen 16 für Nasenlöcher eingebracht. Das Kopfstützteil 20 hat die Kopfaufnahmeöffnung 29 und das Schnabelumhüllungsteil 21 hat die Schnabelaufnahmeöffnung 30.

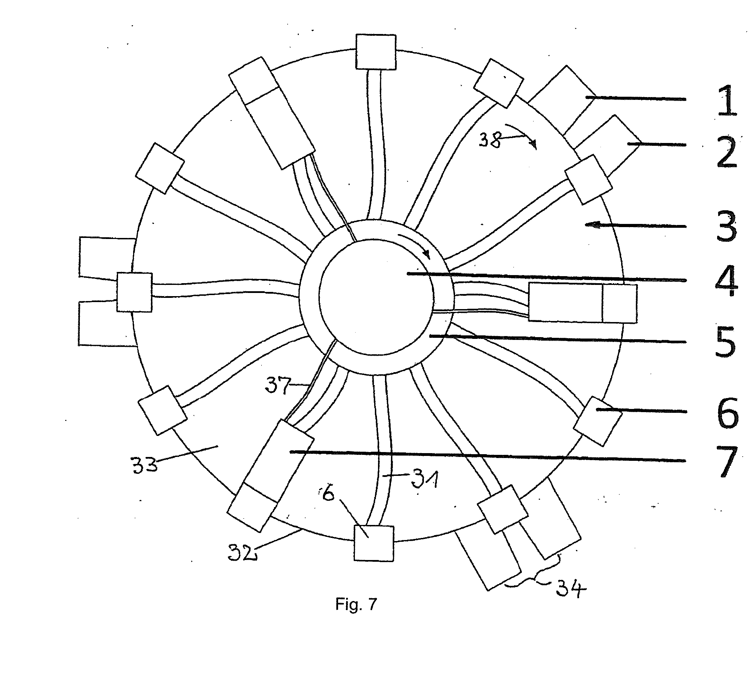

In Fig. 7 ist eine schematische Darstellung in Draufsicht eines mehrere erfindungsgemäße Vorrichtungen 6 enthaltenden Einrichtung 3 zur Bestimmung des Geschlechts von lebenden Vögeln in Form eines Karussells gezeigt. Das Karussell 3 gemäß Fig. 7 unter Einsatz mehrerer Vorrichtungen 6 umfasst: ein Rondell 33, eine zentrale Einheit 4 zur Messdatenaufnahme und Energieversorgung der Vorrichtungen 6, eine Einheit 5 zur Spülluftzuführung mittels Druckluftleitungen 31 zu den Spülluftzugängen 10 der Vorrichtungen 6, wobei die Einheit 5 die Einheit 4 umgibt, und mindestens eine feststehende Ramanspektroskopie-Basiseinheit 7, deren Bauteile von der Energieversorgung gespeist werden. Die Vorrichtungen 6 sind am Rand 32 des Rondells 33 befestigt. Die Einrichtung weist eine vorgegebene erste Stillstands-Positionen für die Aufnahme der Vögel und zur tatsächlichen Messdatenaufnahme und gegebenenfalls eine vorgegebene zweite Stillstands-Positionen zur Separierung der Vogelküken auf, deren Geschlecht bestimmt worden ist. Ferner ist zumindest eine Separationseinheit 34 mit einem ersten Transportband 1 für das Hauptprodukt, z.B. von weiblichen Kücken, und mit einem zweiten Transportband 2 für das Nebenprodukt, z.B. von männlichen Küken vorgesehen, wobei die Separationseinheit 34 mit einer Geschlechts-Entscheidungs-Auswerteeinheit (nicht eingezeichnet) in Verbindung steht.

Die Bewegungsrichtung 38 zeigt die Führungsrichtung des Rondells 33.

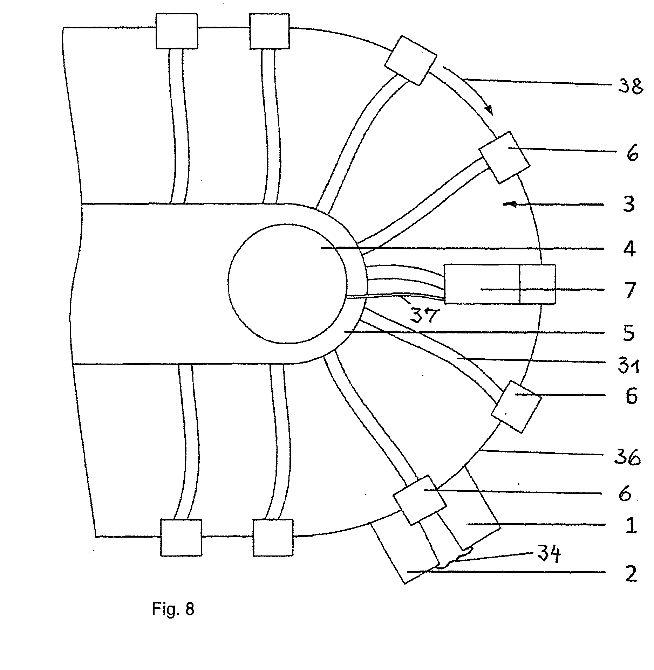

In Fig. 8 ist eine schematische Darstellung in Draufsicht einer weiteren mehrere erfindungsgemäße Vorrichtungen 6 enthaltenden Einrichtung 3 zur Bestimmung des Geschlechts von lebenden Vögeln von lebenden Vögeln unter Einsatz mehrerer Vorrichtungen 6 gezeigt. Die Einrichtung 3 gemäß Fig. 8 umfasst: ein Endlosband 36, eine Einheit 4 zur Messdatenaufnahme und Energieversorgung der Vorrichtungen 6, eine Einheit 5 zur Spülluftzuführung mittels Druckluftleitungen 31 zu den Spülluftzugängen 10 und 25 der Vorrichtungen 6, wobei die Einheit 5 die Einheit 4 umgibt, und mindestens eine feststehende Ramanspektroskopie-Basiseinheit 7, deren Bauteile von der Energieversorgung mittels der Versorgungsleitungen 37 gespeist werden. Die Vorrichtungen 6 sind am Endlosband 36 befestigt. Die Einrichtung weist vorgegebene erste Stillstands-Positionen für die Aufnahme der Vögel und zur tatsächlichen Messdatenaufnahme, und gegebenenfalls vorgegebene zweite Stillstands-Positionen zur Separierung der Vogelküken auf, deren Geschlecht bestimmt worden ist. Ferner ist zumindest eine Separationseinheit 34 mit einem ersten Transportband 1 für das Hauptprodukt, z.B. von weiblichen Kücken, und mit einem zweiten Transportband 2 für das Nebenprodukt, z.B. von männlichen Küken vorgesehen, wobei die Separationseinheit 34 mit einer Geschlechts-Entscheidungs-Auswerteeinheit (nicht eingezeichnet) in Verbindung steht. Die Geschlechts-Entscheidungs-Auswerteeinheit kann mit der Einheit 4 zur Messaufnahme und Energieversorgung unmittelbar verbunden sein.

In der Ramanspektroskopie-Basiseinheit 7 können Sensoreinheiten und andere zugehörige elektrische und optische Einheiten sowie Stromversorgungsleitungen enthalten sein.

Die Bewegungsrichtung 38 zeigt die Führungsrichtung des Endlosbandes 36.

Die Vorrichtung 6 bzw. die Vorrichtungen 6 kann/können ein Teil einer Einrichtung 3 zur Bestimmung des Geschlechts von Vögeln sein. Wie vorstehend beschrieben wird hierzu in der erfindungsgemäßen Vorrichtung 6 der Schnabel des Kükens beispielsweise in eine Schnabelaufnahmeöffnung 30 eingeführt und so positioniert, dass eine schwingungsspektroskopische Messung im Bereich zwischen der Schnabelhaut zumindest auf der Oberseite des Schnabels und dem Eizahn des Kükens ermöglicht wird. Für die wenige Sekunden betragende Zeit der Messdatenaufnahme wird der Schnabel des Kükens ortsfest in der vogelkopfangepassten Reliefmaske 35 - die alle genannten Aussparungen 14, 15, 16, 17 aufweisen kann - gehaltert und mit Licht z.B. eines Lasers entsprechender Wellenlänge und Intensität bestrahlt. Das charakteristische Spektrum der Molekülschwingungen wird erfasst und mit repräsentativen Referenzspektren verglichen, beispielsweise in einer Ramanspektroskopie-Auswerteeinheit.

Für eine schnelle Bestimmung des Geschlechts einer großen Anzahl von Küken kann zur Aufnahme der Küken das mit entsprechenden Halterungen bestückte, mehrere Vorrichtungen 6 enthaltende Karussell 3, ein Endlosband oder ein entsprechendes Magazin zur Messwerterfassung dienen. Zur Entkopplung der Laseroptik vom Küken selbst und zur Vermeidung von Verunreinigungen kann der Sensorkopf/Sensorzugang 8 im Bereich der Laseroptik mit Druckluft gespült werden. Um die Belastung für das Küken zu senken, kann der Bereich der Augen des Kükens mittel Lichtfängen 9 und 24 abgedunkelt werden. Zusätzlich ist eine akustische Depression der Kükenaktivität möglich. Dazu wird dem Küken ein charakteristischer Ton oder eine Tonfolge entsprechender Lautstärke durch eingebaute Lautsprecher 18, 19 zugeführt und entweder über Luft- oder Körperschall übertragen.

Die erfindungsgemäßen Einrichtungen zur Bestimmung des Geschlechts von Vögeln weisen, wie beschrieben, jeweils eine Einheit zur Aufnahme und Auswertung charakteristischer Molekülschwingungen auf. Zur Auswertung können dabei beispielsweise die im Rahmen der Druckschrift DE 10 2007 013 107 B4 genannten schwingungsspektroskopischen Verfahren, insbesondere das Ramanspektroskopie-Verfahren verwendet werden, wobei das Verfahren für eine an die Bedingungen in der Brüterei angepasste erfindungsgemäße Vorrichtung, zur schonenden, automatischen Zuführung, Halterung, Geschlechtsbestimmung und Abfuhr des Kükens angepasst ist.

Die Geschlechtsbestimmung des mit der erfindungsgemäßen Vorrichtung arretierten Vogels erfolgt allgemein durch Auswertung charakteristischer Schwingungsspektren, vorzugsweise mittels Raman-Spektroskopie.

Bei der Raman-Spektroskopie handelt es sich allgemein um ein schwingungsspektroskopisches Verfahren, wobei die Probe (z.B. der Schnabel des Kükens) mit Licht entsprechender Wellenlänge zur Molekülschwingung angeregt wird. Dabei wird das Streulicht analysiert, das von der Probe zurück gestreut wird. Die Streuprozesse können ganz allgemein in zwei charakteristische Streuprozesse unterteilt werden. Zum einen kann das einfallende Licht elastisch gestreut werden (Rayleigh-Streuung), wobei das einfallende Licht und das gestreute Licht die gleiche Frequenz besitzt. Zum anderen kann das einfallende Licht inelastisch gestreut werden, wobei das gestreute Licht eine höhere oder niedrigere Frequenz als das einfallende Licht besitzt. Dadurch entstehen im Streuspektrum neben dem elastisch gestreuten Licht der Rayleigh-Streuung auf beiden Seiten der Anregungslinie eine frequenzverschobene inelastische Streustrahlung, die Raman-Streuung.

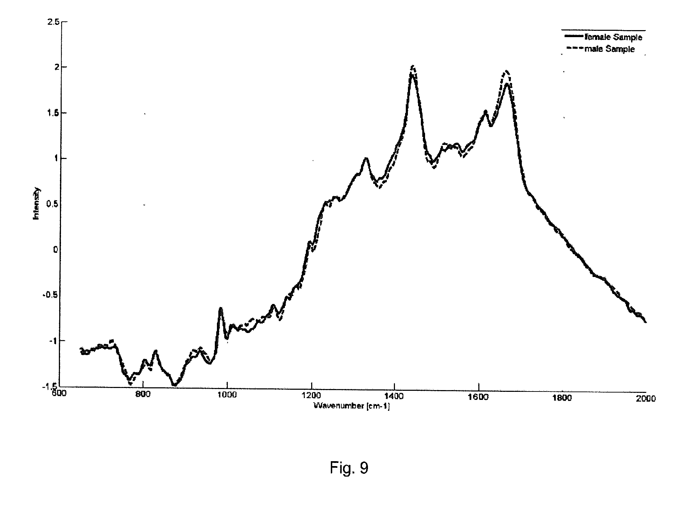

Ein typisches Raman-Spektrum ist in Fig. 9 für einen Wellenzahlbereich von ca. 600 cm⁻¹ bis 2000 cm⁻¹ gezeigt. Die durchgezogene Messkurve entspricht dabei einer Messkurve an einem weiblichen Küken und die gestrichelte Messkurve an einem männlichen Küken. Die Intensität der gestreuten Strahlung unterscheidet sich zwischen den beiden Geschlechtern je nach Wellenzahl.

Auch wenn das Verfahren hier anhand der Raman-Streuung beschrieben wird, können auch andere spektroskopische Verfahren verwendet werden, solange diese eine schwingungsspektroskopische Untersuchung der Probe (z.B. des Schnabels des Kükens) zulassen. Beispiele für geeignete spektroskopische Verfahren könnten IR- oder THz-Spektroskopie sein. Die THz-Strahlung oder das ferne Infrarot eignet sich dabei eher zur Untersuchung von schwachen intramolekularen Wechselwirkungen.

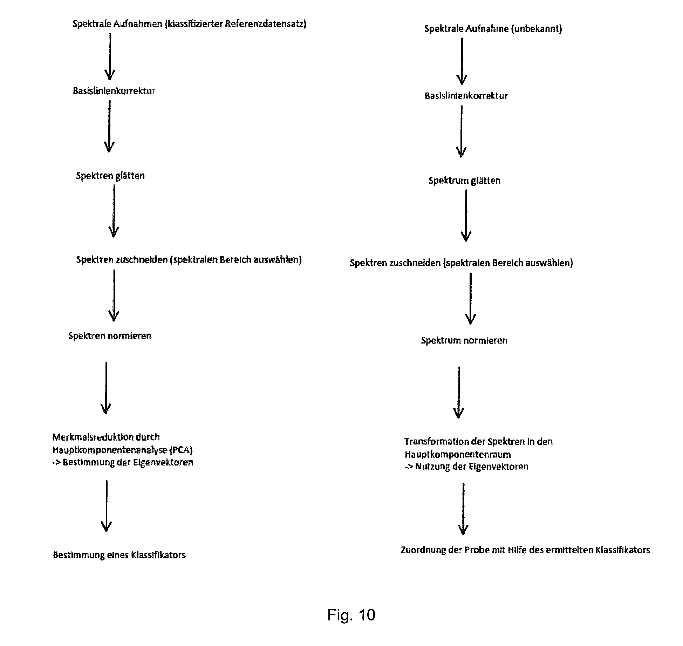

Aufgrund der Komplexität der Spektren sind die Unterschiede im Spektrum zwischen den Geschlechtern meist schwer zu visualisieren, weshalb insbesondere chemometrische Methoden zur Analyse der Spektren zum Einsatz kommen. Chemometrik beinhaltet die Anwendung statistischer und mathematischer Methoden zur Datenanalyse. Fig. 10 beschreibt beispielhaft ein erfindungsgemäßes Analyseverfahren der aufgezeichneten Messdaten (Spektren) zur Geschlechtsbestimmung. In vorliegendem Beispiel beinhaltet die Analyse das Aufnehmen eines klassifizierten Referenzspektrums. Dazu wird ein Spektrum eines Vogels bekannten Geschlechts unter Verwendung des oben beschriebenen Verfahrens aufgezeichnet und in einem ersten Schritt eine Basislinienkorrektur durchgeführt. Daraufhin wird das Spektrum geglättet, z.B. mit Hilfe eines gleitenden Mittelwertes, eines Binomialfilters, oder einer Polynomglättung. Vorzugsweise wird das Spektrum in einem weiteren Schritt auf einen bestimmten Bereich zugeschnitten und normiert, z.B. unter Verwendung eines Mittelwerts, einer Betrag-1-Normierung, oder mit der Standard Normal Variant (SNV) Transformation (Normierung auf die Standardabweichung). In einem weiteren Schritt wird eine Merkmalsreduktion mit Hilfe der Hauptkomponentenanalyse (PCA) durchgeführt (Bestimmung der Eigenvektoren). Aus dem bearbeiteten Spektrum werden nun ein oder mehrere Klassifikatoren bestimmt. Dies kann sowohl ein Minimum-Distanz-Klassifikator, als auch ein Bayes-Klassifikator o.ä. sein. Ferner kann die Berechnung einer Trennfunktion, Trennfläche, z.B. durch eine lineare Diskriminanzanalyse (Berechnung der Diskriminanzfunktion(en) inkl. Bestimmung der Trennkraft der Hauptkomponenten) zur Bestimmung eines oder mehrere Klassifikatoren vorteilhaft sein. Die beschriebene Bearbeitung eines Spektrums kann selbstverständlich mehrmals an verschiedenen Vögeln des gleichen Geschlechts wiederholt werden um die Statistik des Referenzdatensatzes zu erhöhen.

Nachdem ein Referenzdatensatz (bzw. eine statistisch relevante Datenbank) vorliegt kann eine Messung eines Vogels unbekannten Geschlechts durchgeführt werden. Dazu sind die Schritte zur Bearbeitung des gemessenen Spektrums im Wesentlichen identisch zu den Schritten zur Bearbeitung des Referenzdatensatzes. Im letzten Schritt wird dann ein Vergleich zwischen den Klassifikatoren des Referenzdatensatzes und dem Spektrum des Vogels unbekannten Geschlechts durchgeführt um das Geschlecht zu bestimmen.

Der Referenzdatensatz sollte vorzugsweise für männliche sowie weibliche Vögel durchgeführt werden um für beide Fälle einen Datensatz zu generieren. Allerdings ist es ebenfalls möglich nur einen Datensatz für ein Geschlecht zu bestimmen um bei einer Messung eines Vogels unbekannten Geschlechts festzustellen ob er mit dem Referenzdatensatz übereinstimmt oder nicht. Dies würde zur Bestimmung bereits ausreichen. Auch wenn die Bearbeitung der Spektren hier anhand von einem Ablaufplan beschrieben wird, kann vom Fachmann jede ihm bekannte Methode zur Bearbeitung von Spektren herangezogen werden ohne vom Gedanken der vorliegenden Erfindung abzuweichen.

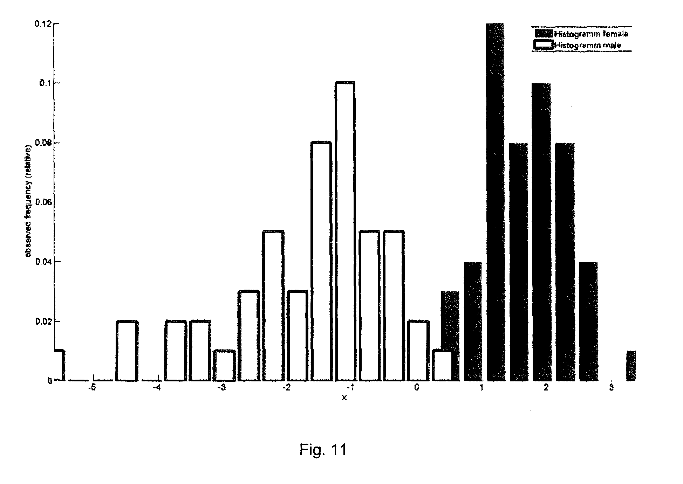

In Fig. 11 ist ein beispielhaftes Histogramm gezeigt, das die Verteilung für weibliche (ausgefüllte Balken) und männliche (unausgefüllte Balken) Vögel zeigt. Das Histogramm wurde aus den Spektren aus Fig. 9 unter Verwendung des Analyseverfahrens gemäß Fig. 10 generiert. Genauer gesagt wurden die Spektren über einen Wellenlängenbereich von 100 cm⁻¹ bis 4278 cm⁻¹ mit der Ramanspektroskopie aufgenommen. Zur Glättung wurde ein Binominalfilter 13. Ordnung verwendet. Ferner wurde der Spektralbereich auf 650 cm⁻¹ bis 2000 cm⁻¹ zugeschnitten und eine Normierung mittels SNV Transformation durchgeführt. In einem weiteren Schritt wurde eine Hauptkomponentenanalyse durchgeführt und eine Diskriminanzfunktion unter Verwendung von 15 Hauptkomponenten durchgeführt. Das Histogramm zeigt die Verteilung der berechneten Diskriminanzwerte für alle Beobachtungen für weibliche (ausgefüllte Balken) und männliche (unausgefüllte Balken) Proben.

Während die vorliegende Erfindung hier unter Bezug auf ihre bevorzugten Ausführungsformen beschrieben und dargestellt wurde, ist für Fachleute auf dem Gebiet offensichtlich, dass verschiedene Modifikationen und Änderungen daran vorgenommen werden können, ohne den Schutzbereich der Erfindung zu verlassen. Auf diese Weise ist beabsichtigt, dass die vorliegende Erfindung die Modifikationen und Änderungen dieser Erfindung abdeckt, sofern sie in den Schutzbereich der beigefügten Patentansprüche und ihrer Äquivalente fallen. Insbesondere ist dem Fachmann klar, dass die Merkmale, welche im Zusammenhang mit einer bestimmten bevorzugten Ausführungsform beschrieben wurden auch mit Merkmalen anderer Ausführungsformen kombiniert werden können.

### Bezugszeichenliste

- 1: Transportband
- 2: Transportband
- 3: Einrichtung/Karussell
- 4: Messdatenaufnahme und Energieversorgung
- 5: Spülluftversorgungseinheit
- 6: Vorrichtung zur Arretierung
- 7: Ramanspektroskopie-Basiseinheit
- 8: Sensorzugang
- 9: erster Lichtfang
- 10: erster Spülluftzugang
- 11: Fokussierung/Objektiv zur Ramanlicht-Erfassung
- 12: Zugang zur Fokussierung
- 13: erster Haltearm/Arretierungshebel
- 13a: Anpasshalteteil
- 13b: Befestigungsteil
- 14: Aussparung für den Kopf
- 15: Aussparung für den Schnabel
- 16: Aussparung für die Nasenlöcher
- 17: Aussparung für den Hals/Körper
- 18: erste Akustikeinheit/erster Lautsprecher
- 19: zweite Akustikeinheit/zweiter Lautsprecher
- 20: Kopfstützteil
- 21: Schnabelumhüllungsteil
- 22: Halsstützteil
- 23: Lichtkanal
- 24: zweiter Lichtfang
- 25: zweiter Spülluftzugang
- 26: zweiter Haltearm/Arretierungshebel
- 27: Richtung der Verschiebung des Haltearms
- 28: Richtung der Schwenkbewegung des Haltearms
- 29: Kopfaufnahmeöffnung
- 30: Schnabelaufnahmeöffnung
- 31: Druckluftleitungen
- 32: Rand des Rondells
- 33: Rondell
- 34: Separationseinheit
- 35: Reliefmaske
- 36: Endlosband
- 37: Versorgungsleitungen
- 38: Bewegungsrichtung
- 39: Anregungslicht
- 40: Messareal

## Patentansprüche

1. Vorrichtung (6) zur Arretierung mindestens eines Körperteils eines lebenden Vogels für die Aufnahme charakteristischer Schwingungsspektren,
wobei die Vorrichtung umfasst:
- eine Reliefmaske (35) zur Einfügung des zu arretierenden Körperteils
- mindestens einen zur Arretierung des Körperteils vorgesehenen, bewegbaren Haltearm (13, 26), und
- einen Sensorzugang (8) mit einem Lichtkanal (23) zur Führung des von einer Lichtquelle auf den arretierten Körperteil eingestrahlten Anregungslichts (39) und zur Aufnahme des vom arretierten Körperteil rückgestreuten Lichts.

2. Vorrichtung nach Anspruch 1,
wobei die Reliefmaske (35) mindestens eine Aussparung (14, 15, 16, 17) aufweist, die weitgehend der Form des Körperteils entspricht.

3. Vorrichtung nach Anspruch 1 oder 2,
wobei das Körperteil einen Kopf, einen Schnabel und/oder einen Hals eines Vogels umfasst und die Reliefmaske (35) eine Aussparung (14) für den Kopf, eine Aussparung (15) für den Schnabel, und/oder eine Aussparung (17) für den Hals des Vogels umfasst, wobei die Aussparungen (14, 15, 17) vorzugsweise einen einheitlichen Raum in Form der Reliefmaske (35) zumindest für ein Vorderteil des Kopfes des Vogels ausbilden.

4. Vorrichtung nach Anspruch 3, wobei der mindestens eine bewegbare Haltearm (13, 26) im Bereich der Aussparung (17) für den Hals des Vogels angeordnet ist.

5. Vorrichtung nach einem der Ansprüche 1 bis 4,
wobei die Vorrichtung (6) ferner einen ersten Lichtfang (9) aufweist, der vorzugsweise zwischen dem Sensorzugang (8) und der Aussparung (14) für den Kopf angeordnet ist.

6. Vorrichtung nach einem der Ansprüche 3 bis 5,
wobei die Vorrichtung (6) ferner umfasst:
- ein Kopfstützteil (20),
- ein Schnabelumhüllungsteil (21), und/oder
- ein Halsstützteil (22),
wobei dem Kopfstützteil (20) die Aussparung (14) für den Kopf, dem Schnabelumhüllungsteil (21) die Aussparung (15) für den Schnabel, und dem Halsstützteil (22) die Aussparung (17) für den Hals des Vogels zugeordnet sind.

7. Vorrichtung nach einem der Ansprüche 1 bis 6, wobei der Lichtkanal (23) durch das Kopfstützteil (20) und das Schnabelumhüllungsteil (21) zu einem Messareal (40) verläuft und das Halsstützteil (22) vorzugsweise mit dem Schnabelumhüllungsteil (21) vereinigt ist.

8. Vorrichtung nach Anspruch 6 oder 7,
wobei das Kopfstützteil (20) eine Kopfaufnahmeöffnung (30) und das Schnabelumhüllungsteil (21) eine Schnabelaufnahmeöffnung (29) aufweisen, die Teil der Reliefmaske (35) sind.

9. Vorrichtung nach einem der Ansprüche 3 bis 8,
wobei der Lichtkanal (23) bis etwa auf den mittigen Bereich einer oberen Ausbuchtung der Aussparung (15) für den Schnabel geführt ist.

10. Vorrichtung nach einem der Ansprüche 1 bis 9,
wobei die Vorrichtung (6) einen ersten Spülluftzugang (10) aufweist, wobei der Spülluftzugang (10) vorzugsweise durch den Lichtfang (9) und das Kopfstützteil (20) hindurch geführt ist und in dem Lichtkanal (23) zur dortigen Reinigung mündet.

11. Vorrichtung nach einem der Ansprüche 6 bis 10,
wobei sich am Schnabelumhüllungsteil (21) und am Halsstützteil (22) ein zweiter Lichtfang (24) befindet, wobei durch den zweiten Lichtfang (24) hindurch vorzugsweise ein zweiter Spülluftzugang (25) geführt ist, der in den Lichtkanal (23) mündet.

12. Vorrichtung nach einem der Ansprüche 1 bis 11,
wobei sich im Lichtkanal (23) eine Fokussiereinrichtung (11) in Form eines Objektivs oder einer einfachen sammelnden Linse befindet.

13. Vorrichtung nach Anspruch 12,
wobei der Lichtkanal (23) bzw. der Sensorzugang (8) einen Zugang (12) zur Fokussiereinrichtung (11) aufweist um eine Einstellung der Fokussiereinrichtung (11) zu ermöglichen.

14. Vorrichtung nach einem der Ansprüche 1 bis 13,
wobei der mindestens eine bewegbare Haltearm (13, 26) als mindestens ein bewegbarer Arretierungshebel, als drehbar gelagerter bügelförmiger, dem Körperteil angepasster Haltearm (13, 26) und/oder keulenförmig ausgebildet ist.

15. Vorrichtung nach einem der Ansprüche 1 bis 14, wobei die Bewegung des Haltearms (13, 26) gesteuert ausgelöst und rückgeführt wird, wobei der mindestens eine bewegbare Haltearm (18, 19) vorzugsweise in gerader Verschiebung (27) oder mit Schwenkungsdurchführung (28) ausgebildet ist.

16. Vorrichtung nach einem der Ansprüche 1 bis 15,
wobei der mindestens eine Haltearm (13, 26) paarweise angeordnet ist, vorzugsweise im Bereich der Aussparung (17) für den Hals.

17. Vorrichtung nach einem der Ansprüche 1 bis 16,
die ferner mindestens einen Lautsprecher (18, 19) aufweist, wobei der Lautsprecher (18, 19) vorzugsweise mit dem mindestens einen Haltearm (13, 26) in Verbindung steht.

18. Vorrichtung nach einem der Ansprüche 6 bis 17,
wobei das Schnabelumhüllungsteil (21) mindestens zwei Aussparungen (16) für Nasenlöcher aufweist.

19. Einrichtung zur Bestimmung des Geschlechtes eines lebenden Vogels anhand von charakteristischen Schwingungsspektren, welche aufweist:
- eine Vorrichtung (6) zur Arretierung des lebenden Vogels, insbesondere nach einem der Ansprüche 1 bis 18; und
- eine Einheit (7) zur Aufnahme von charakteristischer Schwingungsspektren mit einer Lichtquelle, einem Sensor und einer Auswerteeinheit, vorzugsweise eine Ramanspektroskopieeinheit..

20. Einrichtung (3) zur Bestimmung des Geschlechtes von lebenden Vögeln anhand von charakteristischer Schwingungsspektren, welche aufweist:,
- ein Rondell (33) oder ein Endlosband (36);
- mindestens zwei Vorrichtungen (6) zur Arretierung eines lebenden Vogels, insbesondere nach einem der Ansprüche 1 bis 18; und
- mindestens eine Einheit (7) zur Aufnahme von charakteristischer Schwingungsspektren, mit einer Lichtquelle, einem Sensor und einer Auswerteeinheit, vorzugsweise eine Ramanspektroskopieeinheit..

21. Einrichtung nach Anspruch 20,
wobei die mindestens zwei Arretierungsvorrichtungen (6) an einem äußeren Rand (32) des Rondells (33) bzw. des Endlosbandes (36) angebracht sind, und wobei die Einrichtung ferner aufweist:
- eine zentrale Einheit zur Energieversorgung (4) der mindestens zwei Vorrichtungen (6) zur Arretierung eines lebenden Vogels;
- eine Einheit zur Spülluftzuführung (5) zu den Arretierungsvorrichtungen (6), wobei die Einheit zur Spülluftzuführung (5) vorzugsweise die Einheit zur Energieversorgung (4) umgibt; und
- mindestens eine Separationseinheit (34).

22. Einrichtung nach Anspruch 21, wobei die Separationseinheit (34) mit einer Geschlechts-Entscheidungs-Auswerteeinheit in Verbindung steht und vorzugsweise ein erstes Transportband (1) und ein zweites Transportband (2) aufweist.

23. Einrichtung nach einem der Ansprüche 20 bis 22, wobei die Einrichtung eine vorgegebene erste Stillstands-Position für die Aufnahme der zu arretierenden Vögel und zur Messdatenaufnahme und eine vorgegebene zweite Stillstands-Position zur Separierung der bereits Geschlechts bestimmten Vögel mit Hilfe der Separationseinheit (34) aufweist.

24. Verfahren zur Bestimmung des Geschlechtes eines lebenden Vogels, insbesondere unter Verwendung einer Vorrichtung nach einem der Ansprüche 1 bis 18, oder einer Einrichtung nach Anspruch 19 oder einem der Ansprüche 20 bis 23, wobei das Verfahren die folgenden Schritte umfasst:
- Arretieren eines Körperteils des lebenden Vogels;
- Einstrahlen eines Anregungslichts auf das arretierte Körperteil unter Verwendung eines Lichtkanals (23);
- Aufnahme des vom arretierten Körperteil rückgestreuten Lichts unter Verwendung des Lichtkanals (23);
- Bestimmung des Geschlechts unter Verwendung von mindestens einem chemometrischen Verfahren.

25. Verfahren nach Anspruch 24, wobei das chemometrische Verfahren den Vergleich eines Schwingungsspetrums des rückgestreuten Lichts mit mindestens einem Referenzspektrum eines männlichen und/oder weiblichen Vogels umfasst.
